# EUROPEAN PATENT SPECIFICATION

(11) **EP 3 241 694 B1**
(45) Date of publication and mention of the grant of the patent: **15.07.2020**
(21) Application number: 17169150.4
(22) Date of filing: 02.05.2017
(51) Int. Cl.: B60G 11/27, B60G 11/28, B60G 11/64

(54) **A PNEUMATIC ASSEMBLY FOR A LIGHT COMMERCIAL VEHICLE; THE LIGHT COMMERCIAL VEHICLE; AND AN ASSEMBLY METHOD OF THE LIGHT COMMERCIAL VEHICLE**
PNEUMATISCHE ANORDNUNG FÜR EIN LEICHTES NUTZFAHRZEUG, LEICHTES NUTZFAHRZEUG UND MONTAGEVERFAHREN FÜR EIN LEICHTES NUTZFAHRZEUG
ENSEMBLE PNEUMATIQUE POUR UN VÉHICULE COMMERCIAL LÉGER ; VÉHICULE COMMERCIAL LÉGER ET PROCÉDÉ D'ASSEMBLAGE DU VÉHICULE COMMERCIAL LÉGER

(30) Priority: 02.05.2016 IT UA20163082
(43) Date of publication of application: 08.11.2017
(73) Proprietor: Streparava S.p.A. Con Socio Unico, 25030 Adro (IT)
(72) Inventor: FERRARIO, Davide, 25030 ADRO (IT); MEGA, Francesco, 25030 ADRO (IT); BARONI, Maurizio, 25030 ADRO (IT)
(74) Representative: Eccetto, Mauro

(56) References cited:
- EP-A1- 0 275 407
- EP-A1- 0 464 412
- EP-A1- 1 707 408
- DE-C- 953 228

## Description

The present invention relates to a pneumatic assembly for a light commercial vehicle; the light commercial vehicle; an assembly method of the light commercial vehicle and a conversion method of a light commercial vehicle.

The use of light commercial vehicles is increasingly growing, mainly in urban and suburban areas, for the transport of persons and objects. Commercial vehicles require high performances in terms of flexibility and manoeuvrability. In particular, they require robustness both in supporting heavy loads and in resisting shocks, efforts and heavy stresses due, for example, to a rough terrain.

A range of commercial vehicles uses suspensions whose torsion bars are longitudinal with respect to the vehicle. These commercial vehicles have a cab height that is not adjustable by the driver. Accordingly, the cab floor height cannot be adjusted by the driver.

Documents DE 953 228 C, EP 0 275 407 A1, EP 1 707 408 A1, disclose vehicle suspension systems wherein the cab floor height cannot be adjusted by the driver. EP 0 464 412 A1 discloses another vehicle suspension system.

The purpose of the present invention is to provide a conversion kit for a light commercial vehicle that reduces the drawbacks of the prior art.

In accordance with this purpose, it has been provided a conversion kit for a light commercial vehicle comprising a suspension having a torsion bar; the conversion kit comprising a pneumatic assembly for a suspension of a light commercial vehicle comprising an adjustable air spring having a first end with a first adjustable position; a transmission system operatively connected to the air spring so as to take a preferably angular second position based on the position of the first end of the air spring; the transmission system being configured to be connected to the suspension of the vehicle so as to vary a configuration of the suspension of the vehicle based on the position of the air spring; wherein the transmission system is configured to be connected to the suspension instead of the torsion bar, in particular the transmission system having a coupling portion with a dimension equal to a dimension of a coupling portion of the torsion bar to be removed. In particular, the dimension of the coupling portion being a diameter of the coupling portion.

According to a preferred embodiment, the air spring is connected to a support structure, which is configured to be connected to a load-bearing structure of the vehicle. According to a preferred embodiment, the transmission system comprises a transfer element and a transmission arm; the transmission arm being operatively connected to the air spring so that a position, preferably angular, of the transmission arm depends on the first position of the air spring; the transmission arm being integrally connected to the transfer element; the transfer element being configured to be integrally connected to the suspension to vary a position of the suspension based on the first position.

According to a preferred embodiment, the transmission arm and the transfer element are connected together so that an angular position of the transfer element varies based on the angular position of the transmission arm; and wherein the transmission system is configured to transmit the angular position of the transfer element to the suspension, in particular to a suspension arm, in order to vary the configuration of the suspension.

According to a preferred embodiment, the pneumatic assembly comprises a lower plate abutting against the transmission system, in particular against the transmission arm.

According to a preferred embodiment, the pneumatic assembly comprises an upper plate interposed between the air spring and a support element of the pneumatic group.

According to a preferred embodiment, the pneumatic assembly comprises an end-of-travel buffer, preferably inside a compartment of the air spring.

Thanks to the present invention, the conversion kit allows converting a light commercial vehicle having a non-adjustable vehicle floor height into a light commercial vehicle having an adjustable vehicle floor height. The transfer element is coupled to the suspension instead of the torsion bar, and the configuration of the suspension varies thanks to the adjustable air spring. In particular, the pneumatic assembly acts on a suspension arm by varying the inclination of said arm and consequently the vehicle floor height. In more detail, the vehicle includes an axle assembly having a support structure, in particular a cross member, and the suspension is connected to the support structure by means of at least one joint. The transfer element of the pneumatic assembly is integrally connected to the suspension, in particular to the suspension arm at the joint. When the configuration of the air spring varies, the transfer element rotates and, in turn, causes the rotation of the suspension arm. The suspension arm rotating under the action of the transfer element varies the configuration of the suspension, and consequently varies the height from the ground of the support structure of the axle assembly, and therefore the height from the ground of the vehicle cab.

Another object of the present invention is to provide a light commercial vehicle that reduces the drawbacks of the prior art.

Another object of the present invention is to provide a conversion method of a light commercial vehicle comprising a torsion bar that reduces the drawbacks of the prior art. According to the present invention, it is provided a conversion method of a light commercial vehicle; wherein the commercial vehicle comprises a suspension having a torsion bar; an axle assembly comprising a support structure and a suspension; the method comprising the following step: coupling an adjustable air spring, configured to take a plurality of positions, to a transmission system so that the transmission system rotates by varying the position of the air spring; integrally coupling the transmission system to the vehicle suspension at a connection point so as to transfer a rotation from the transmission system to the suspension and vice versa; the method comprising the steps of removing the torsion bar from the suspension of the vehicle at the connection point; and integrally coupling the transmission system to the vehicle suspension at the connection point instead of the torsion bar.

According to a preferred embodiment, the method provides the steps of connecting the suspension to the load-bearing structure of the axle assembly by means of a joint at the connection point.

Thanks to the present invention, a light commercial vehicle having a non-adjustable cab floor height can be converted into a light commercial vehicle having an adjustable cab floor height. In fact, the transmission system transmits to the suspension, in the form of rotation, the position of the air spring and the suspension, in turn, varies the cab floor height, in particular the height from the ground of the cab floor (i.e. of its treadable surface). The adjustment of the height from the ground of the treadable surface facilitates the access of the passengers or the loading and unloading of the light commercial vehicle. Further characteristics and advantages of the present invention will become apparent from the following description of a non-limiting example of embodiment with reference to the figures of the accompanying drawings, wherein:
- Figure 1 is a front view, with parts in section and parts removed for clarity's sake, of a light commercial vehicle manufactured according to the present invention;
- Figure 2 is a side view, with parts removed for clarity's sake, of the light commercial vehicle of Figure 1;
- Figure 3 is a top view in section along the plane III-III and with parts removed for clarity's sake, of a detail of Figure 1;
- Figure 4 is a rear view in section along the plane IV-IV of a detail of Figure 2; and

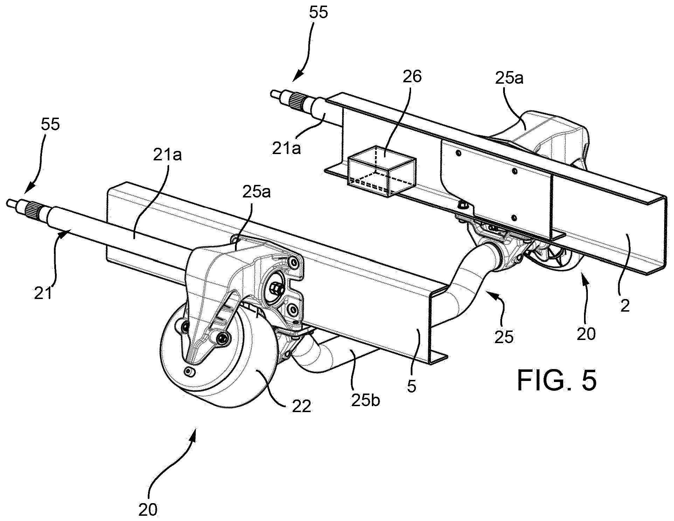

- Figure 5 is a perspective view with parts removed for clarity's sake, of a detail of Figure 1.

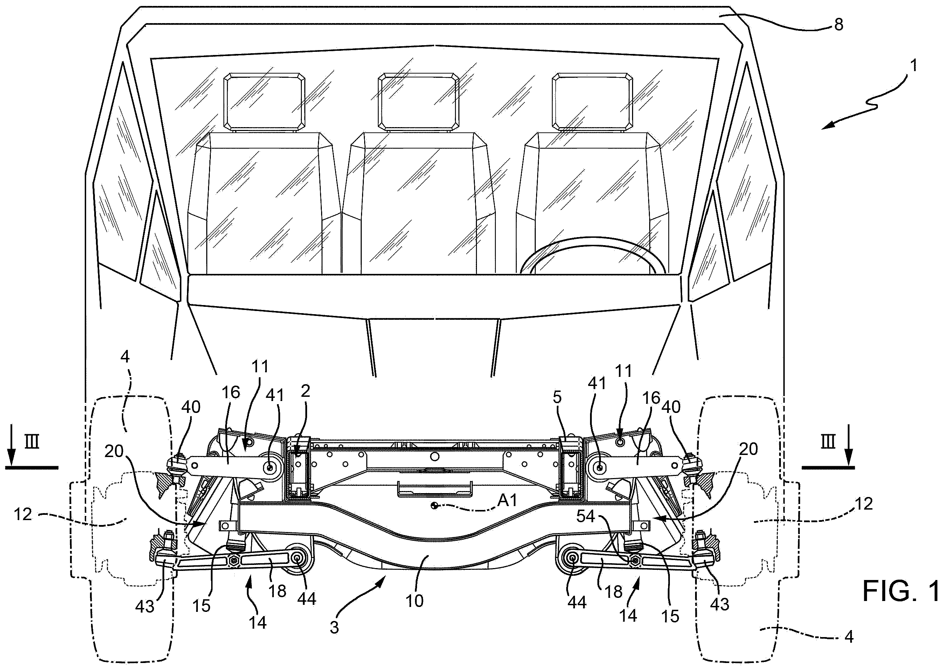

With reference to Figure 1, the reference number 1 indicates a light commercial vehicle.

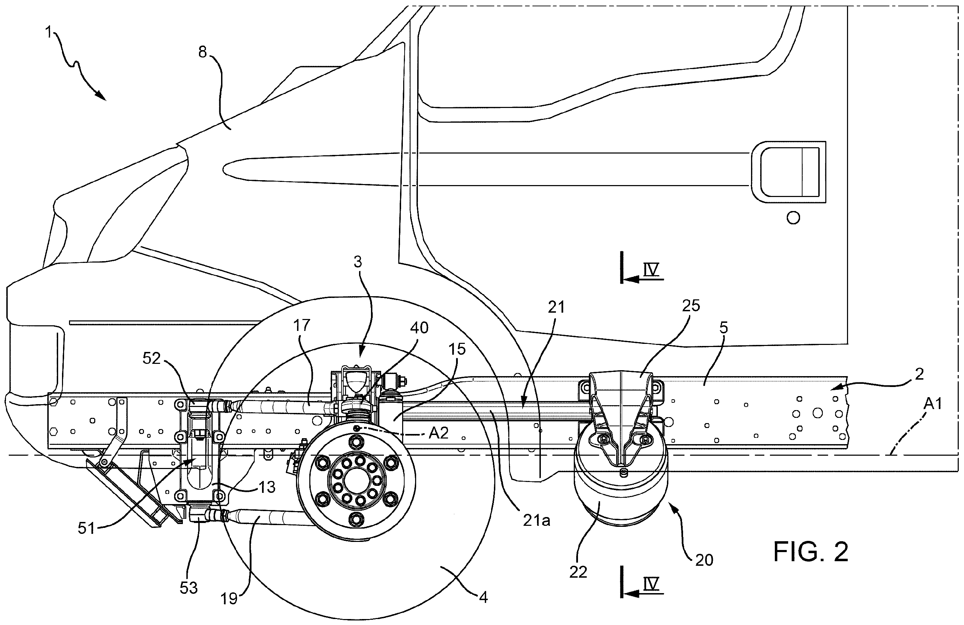

With reference to Figures 1 and 2, the light commercial vehicle 1 extends along a longitudinal axis A1 and comprises: a load-bearing structure 2; an axle assembly 3 coupled to the load-bearing structure 2; wheels 4 coupled to the axle assembly 3; and two pneumatic assemblies 20 coupled to the load-bearing structure 2 and to the axle assembly 3.

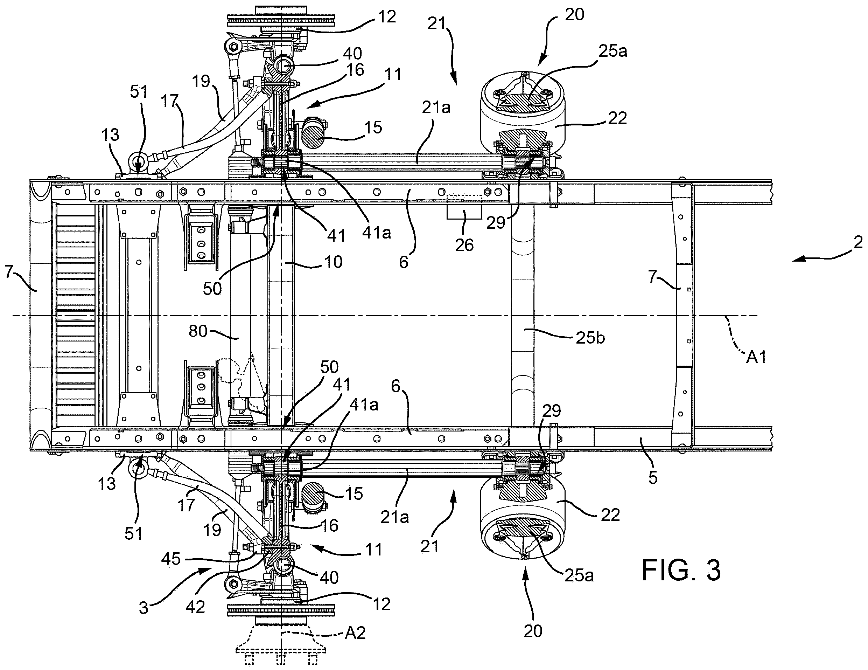

With reference to Figure 3, the load-bearing structure 2 comprises a frame 5 having longitudinal members 6 and cross members 7. With reference to Figures 1 and 2, the vehicle 1 comprises a cab 8 mounted on the frame 5. In an alternative embodiment not shown in the attached figures, the load-bearing structure comprises a cab with a load-bearing shell.

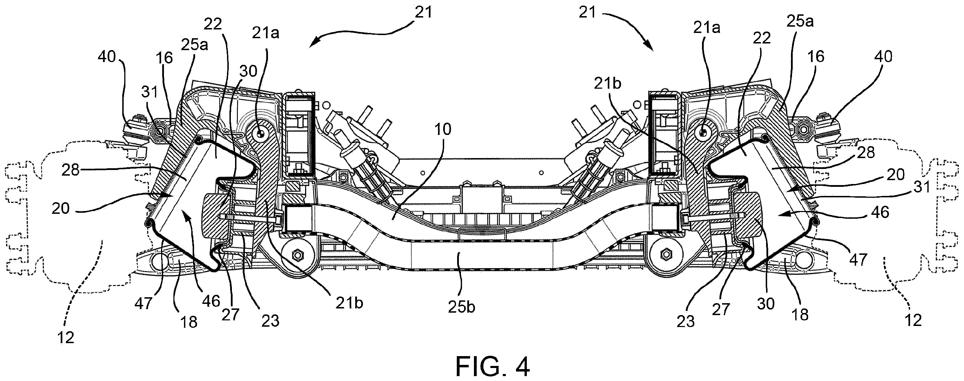

With reference to Figures 3 and 4, the axle assembly 3 comprises a support structure 10, in particular a cross member 10, which extends along an axis A2 which is transversal to the axis A1, preferably perpendicular to the axis A1; two suspensions 11; and two hubs 12 articulated to the cross member 10 by means of the respective suspensions 11.

With reference to Figure 1 and 3, each suspension 11 comprises a mechanical joint 14 that connects in an articulated way the hub 12 to the cross member 10 and a shock absorber 15 arranged between the mechanical joint 14 and the cross member 10.

In more detail, each joint 14 comprises an upper suspension arm 16, an upper tie rod 17, a lower suspension arm 18 and a lower tie rod 19.

On the one hand, each upper arm 16 is directly connected to the respective hub 12 by a respective upper ball joint 40 allowing a vertical steering and oscillation of the hub 12. Moreover, on the other hand, each upper arm 16 is connected to the cross member 10 by means of a respective upper cylindrical joint 41 at a connection point 41a.

Each mechanical joint 14 comprises a plate 13 connected to the load-bearing structure 2 at a connection point 51 different from a connection point 50 between the cross member 10 and the load-bearing structure 2.

The upper tie rod 17 is connected to the upper arm 16 through a connection element 42 and to the plate 13 at a connection point through a ball joint 52.

With reference to Figure 1, the lower arm 18 is connected, on the one hand, directly to the hub 12 by means of a lower ball joint 43 allowing the steering and the oscillation of the hub 12. Moreover, the lower arm 18 is connected, on the other hand, to the cross member 10 at a lower cylindrical joint 44.

The lower tie rod 19 is connected to the lower arm 18 through a connection element 45 and to the plate 13 at a connection point through a ball joint 53.

The shock absorber 15 is arranged between the lower arm 18 and the cross member 10, at a lower connection point 54. The term ball joint means a joint that allows rotation movements about a ball centre. The term cylindrical joint means a joint that allows rotation movements about a rotation axis.

With reference to Figure 1, the vehicle 1 comprises a steering system 80 that is supported by the cross member 10 of the axle assembly 3 and is coupled to the hubs 12 to move them through the ball joints 40 and 43.

Each pneumatic assembly 20 comprises a transmission system 21; an air spring 22; a support structure 25 and a control system 26 of the air spring 22. Moreover, in a non-limiting embodiment of the present invention not shown in the accompanying figures, the pneumatic assembly comprises an air tank.

The transmission system 21 is arranged between the air spring 22 and the suspension 11. The transmission system 21 comprises a transfer element 21a, in particular a rod; and a transmission arm 21b abutting against the air spring 22. The transfer element 21a comprises a coupling portion 55 having at least a diameter, preferably a plurality of coupling diameters.

The transmission system 21 is integrally connected to the suspension 11 and in particular to the upper arm 16, in particular through the coupling portion 55. In particular, the transfer rod 21a is rigidly connected to the upper arm 16 at the connection point 41a. In more detail, the transfer rod 21a is rotatable about a rotation axis and is integrally connected to the arm 16 so as to transfer a rotation to the arm 16 or from the arm 16. In particular, the coupling portion 55 of the rod 21a is connected to the arm 16 at the connection point 41a.

The air spring 22 can take a plurality of configurations based on its air content. Its air content is adjustable by means of the control system 26. In more detail, the air spring 22 has a first end 27 coupled to the suspension 11 through the transmission system 21 and a second end 28 coupled to the load-bearing structure 2 by means of the support structure 25. The second end 28 is opposite the first end 27. The first end 27 can take a plurality of positions based on the configuration of the air spring, i.e. based on the amount of air inside it.

The support structure 25 comprises a support element 25a for each air spring 22 rigidly connected to the second end 28 of the air spring 22 and to the load-bearing structure 2 of the vehicle 1. Moreover, the support element 25a is connected through elastic bushes 29 to the transfer element 21a which, accordingly, is freely rotatable with respect to the support element 25a. The support structure 25 comprises a cross member 25b rigidly connecting the support elements 25a. The support structure 25 is connected to the load-bearing structure 2 of the vehicle 1.

The air spring 22 comprises an inner compartment 46, defined by a membrane 47 and adapted to contain gas, that extends between the ends 27 and 28. The amount of gas in the inner compartment 46 is adjustable. Moreover, the air spring 22 comprises a lower plate 23, which is in contact with the transmission arm 21b; an end-of-travel buffer 30 housed in the compartment 46 and an upper plate 31 housed in the end 28 and in contact with the support element 25a. The end-of-travel buffer 30 in use moves up until abutting against the upper plate 31.

In an embodiment not shown, the plate 31 is omitted and the membrane is directly in contact with the support element 25a, which also operates as the plate 31.

The control element 26 is coupled to the air spring 22 for controlling the amount of gas in the inner compartment 46. The stiffness and the length of the air spring 22 are thus adjustable. Based on the length of the air spring 22, the first end 27 takes a plurality of positions.

The plate 23 is connected to the membrane 47 of the air spring 22 and is arranged out of the membrane 47. The plate 23 is moved in a plurality of positions based on the plurality of positions of the membrane 47.

The transmission arm 21b is connected to the plate 23 and to the transfer element 21a.

In use, the arm 21b rotates around a rotation axis depending on the configuration of the air spring 22, in particular depending on the position of the first end 27 of the air spring 22. The rotation axis extends along the transfer element 21a.

Based on the position taken by the plate 23, the arm 21b rotates the transfer element 21a so that it takes different angular positions. On the one side, the transfer element 21a is rigidly connected to the arm 21b and on the other side it is rigidly connected to the suspension 11, in particular to the upper arm 16 of the suspension 11. In more detail, when the transfer element 21a rotates, it transmits the rotation movement to the upper arm 16 which, in turn, can rotate about the joint 41 and take a plurality of variable inclinations based on the angular position of the transfer element 21a. In this way, the position of the vehicle 1 changes and in particular the height from the ground of the vehicle 1 changes, in particular of the frame 5 of the vehicle 1. By changing the height from the ground of the frame 5 of the vehicle 1, also the height from the ground of the floor of the cab 8 changes, and this allows tilting laterally the floor of the cab 8 to facilitate the ascent or descent of the passengers or to facilitate the loading and unloading of the vehicle 1, as well as evenly raising or lowering the floor with respect to the ground. In other words, when the transmission arm 21b rotates under the action of the air spring 22, it transfers the rotation to the transfer element 21a, which rotates around the rotation axis. The transfer element 21a is integrally connected to the arm 16, thus transferring the rotation to the arm 16. By rotating, the arm 16 varies a position of the cross member 10 of the axle assembly 3 with respect to the ground. By varying the position of the cross member 10 of the axle assembly 3 it also varies a position of the cab 8 of the vehicle 1 with respect to the ground.

The control system 26 is preferably electronic or electrical. The control system 26 can vary the gas volume in the compartment 46 and, consequently, the configuration of the suspensions 11 based on manual commands sent by an operator, or automatically based on commands sent by the control system 26.

Moreover, each air spring 22 is independently adjustable with respect to the other.

In an alternative non-limiting embodiment of the present invention, the pneumatic assembly comprises an air tank containing pressurized air.

Moreover, the road holding and the comfort of the vehicle 1 can be varied by acting on the rigidity of the air spring 22.

The shown vehicle 1 is obtainable both through an assembly process that has provided the aforesaid configuration since the manufacturing of the vehicle 1 and through a conversion process of a vehicle that was initially manufactured with non-adjustable suspensions. In particular, the vehicle 1 can be obtained by converting a light commercial vehicle having suspensions with torsion bars.

In fact, the present invention also relates to a conversion method of a commercial vehicle with a suspension assembly having a torsion bar, in particular longitudinal with respect to the vehicle. In this case, the pneumatic assembly 20 is supplied as a conversion kit to convert the vehicle with the torsion bar into the vehicle 1 with adjustable suspensions.

In this case, the provided conversion process comprises the following steps:
uncoupling the torsion bar from the respective suspension at a connection point;
removing the torsion bar;
integrally coupling the transmission system 21 to the suspension 11 at the connection point 41a, in particular integrally coupling the transfer element 21a to the suspension arm 16 in order to transfer a rotation movement from the transfer element 21a to the arm 16 and vice versa. For this purpose, the diameter of the coupling portion 55 of the rod 21a is equal to the diameter of a coupling portion of the torsion bar that has been removed. Preferably, the coupling diameters of the coupling portion 55 of the rod 21a are equal to the coupling diameters of the coupling portion of the torsion bar.

In a preferred embodiment, the method comprises a further step of removing a reaction system of the torsion bar from the load-bearing structure 2 of the vehicle 1, in other words removing the reaction system that is fixed to the torsion bar on the opposite side with respect to the suspension.

Finally, it is evident that the axle assembly may be subject to modifications and variations without departing from the scope of the appended claims.

## Claims

1. Conversion kit for a light commercial vehicle comprising a suspension having a torsion bar; the kit comprising a pneumatic assembly (20) for a suspension of a light commercial vehicle comprising an adjustable air spring (22) having a first end (27) with a first adjustable position; a transmission system (21) operatively connected to the air spring (22) so as to take a second position, preferably angular, based on the position of the first end (27) of the air spring (22); the transmission system (21) being configured to be connected to the suspension (11) of the vehicle (1) so as to act on a configuration of the suspension (11) based on the first position of the air spring (22); wherein the transmission system (21) is configured to be connected to the suspension (11) instead of the torsion bar, in particular having a coupling portion of the transmission system (21) with a dimension equal to a dimension of a coupling portion of the torsion bar to be removed, said dimension preferably being a diameter.

2. Conversion kit according to claim 1, wherein the air spring (22) is connected to a support structure (25) that is configured to be connected to a load-bearing structure (2) of the vehicle (1).

3. Conversion kit according to claim 1 or 2, wherein the transmission system (21) comprises a transfer element (21a) and a transmission arm (21b); the transmission arm (21b) being operatively connected to the air spring (22) so that a position, preferably angular, of the transmission arm (21b) depends on the first position of the air spring (22); the transmission arm (21b) being integrally connected to the transfer element (21a); the transfer element (21a) being configured to be integrally connected to the suspension (11) to vary a position of the suspension (11) based on the first position of the air spring (22).

4. Conversion kit according to claim 3, wherein the transmission arm (21b) and the transfer element (21a) are connected to each other so that an angular position of the transfer element (21a) varies based on the position of the transmission arm (21b); and wherein the transmission system (21) is configured to transmit the angular position of the transfer element (21a) to the suspension (11), in particular to an arm (16) of the suspension (11), to change the configuration of the suspension (11).

5. Conversion kit according to claim 3 or 4, comprising a plate (23) abutting against the transmission system (21), in particular against the transmission arm (21b).

6. Conversion method of a light commercial vehicle; wherein the light commercial vehicle (1) comprises a suspension (11) having a torsion bar; an axle assembly (3) comprising a support structure (10) and a suspension (11); the method comprising the steps of: coupling an adjustable air spring (22) configured to take a plurality of positions to a transmission system (21), so that the transmission system (21) rotates when the position of the air spring changes; integrally coupling the transmission system (21) to the suspension (11) of the vehicle (1) at a connection point (41a) so as to transfer a rotation from the transmission system (21) to the suspension (11) and vice versa; the method comprising the steps of removing the torsion bar from the suspension of the vehicle (1); and coupling the transmission system (21) to the suspension (11) of the commercial vehicle (1) at the connection point (41a) instead of the torsion bar.

7. Conversion method of a light commercial vehicle of claim 6; comprising the steps of connecting the suspension (11) to the support structure (10) of the axle assembly (3) through a joint (41) at the connection point (41a).

## Patentansprüche

1. Umrüstsatz für ein leichtes Nutzfahrzeug, das eine Aufhängung mit einem Torsionsstab aufweist; wobei der Umrüstsatz eine pneumatische Baugruppe (20) für eine Aufhängung eines leichten Nutzfahrzeugs aufweist, die eine einstellbare Luftfeder (22) mit einem ersten Ende (27) in einer ersten einstellbaren Stellung aufweist; ein Übertragungssystem (21), das mit der Luftfeder (22) so wirkverbunden ist, dass dieses eine zweite, bevorzugt angewinkelte, Stellung je nach der Stellung des ersten Endes (27) der Luftfeder (22) einnimmt; wobei das Übertragungssystem (21) so zur Verbindung mit der Aufhängung (11) des Fahrzeugs (1) ausgebildet ist, dass es auf eine Konfiguration der Aufhängung (11) je nach der ersten Stellung der Luftfeder (22) einwirkt; wobei das Übertragungssystem (21) zur Verbindung mit der Aufhängung (11) anstelle des Torsionsstabs ausgebildet ist, insbesondere einen Kupplungsteil des Übertragungssystem (21) aufweist, dessen Abmessung gleich einer Abmessung eines Kupplungsteils des zu entfernenden Torsionsstabs ist, wobei die Abmessung bevorzugt ein Durchmesser ist.

2. Umrüstsatz nach Anspruch 1, wobei die Luftfeder (22) mit einer Trägerstruktur (25) verbunden ist, die zur Verbindung mit einer Tragstruktur (2) des Fahrzeugs (1) ausgebildet ist.

3. Umrüstsatz nach Anspruch 1 oder 2, wobei das Übertragungssystem (21) ein Übertragungselement (21a) und einen Übertragungsarm (21b) aufweist; wobei der Übertragungsarm (21b) mit der Luftfeder (22) so wirkverbunden ist, dass eine, bevorzugt angewinkelte, Stellung des Übertragungsarms (21b) von der ersten Stellung der Luftfeder (22) abhängt; wobei der Übertragungsarm (21b) einstückig mit dem Übertragungselement (21a) verbunden ist; wobei das Übertragungselement (21a) ausgebildet ist, einstückig mit der Aufhängung (11) verbunden zu werden, um die Stellung der Aufhängung (11) je nach der ersten Stellung der Luftfeder (22) abzuändern.

4. Umrüstsatz nach Anspruch 3, wobei der Übertragungsarm (21b) und das Übertragungselement (21a) so miteinander verbunden sind, dass sich eine Winkelstellung des Übertragungselements (21a) je nach der Stellung des Übertragungsarms (21b) ändert; und wobei das Übertragungssystem (21) zum Übertragen der Winkelstellung des Übertragungselements (21a) auf die Aufhängung (11), insbesondere auf einen Arm (16) der Aufhängung (11) ausgebildet ist, um die Konfiguration der Aufhängung (11) zu verändern.

5. Umrüstsatz nach Anspruch 3 oder 4, aufweisend eine Platte (23), die am Übertragungssystem (21), insbesondere am Übertragungsarm (21b), anliegt.

6. Umrüstverfahren eines leichten Nutzfahrzeugs, wobei das leichte Nutzfahrzeug (1) eine Aufhängung (11) mit einem Torsionsstab; eine Achsbaugruppe (3), die eine Trägerstruktur (10) und eine Aufhängung (11) aufweist, hat, wobei das Verfahren die folgenden Schritte aufweist: Koppeln einer einstellbaren Luftfeder (22), die zum Einnehmen von mehreren Stellungen ausgebildet ist, mit einem Übertragungssystem (21), so dass sich das Übertragungssystem (21) dreht, wenn sich die Stellung der Luftfeder verändert; einstückiges Koppeln des Getriebesystems (21) mit der Aufhängung (11) des Fahrzeugs (1) an einer Verbindungsstelle (41a), um eine Drehung des Übertragungssystem (21) auf die Aufhängung (11) des Nutzfahrzeugs (1) und umgekehrt zu übertragen; wobei das Verfahren die Schritte des Entfernens des Torsionsstabs von der Aufhängung des Fahrzeugs (1) und des Koppelns des Übertragungssystem (21) anstelle des Torsionsstabs mit der Aufhängung (11) des Nutzfahrzeugs (1) an der Verbindungsstelle (41a) aufweist.

7. Umrüstverfahren eines leichten Nutzfahrzeugs nach Anspruch 6, das die Schritte des Verbindens der Aufhängung (11) mit der Trägerstruktur (10) der Achsbaugruppe (3) durch ein Gelenk (41) an der Verbindungsstelle (41a) aufweist.

## Revendications

1. Kit de conversion pour un véhicule commercial léger comprenant une suspension ayant une barre de torsion ; le kit comprenant un ensemble pneumatique (20) pour une suspension d'un véhicule commercial léger comprenant un ressort pneumatique ajustable (22) ayant une première extrémité (27) avec une première position ajustable ; un système de transmission (21) connecté fonctionnellement au ressort pneumatique (22) de manière à adopter une deuxième position, de préférence angulaire, sur la base de la position de la première extrémité (27) du ressort pneumatique (22) ; le système de transmission (21) étant configuré pour être connecté à la suspension (11) du véhicule (1) de manière à agir sur une configuration de la suspension (11) sur la base de la première position du ressort pneumatique (22) ; le système de transmission (21) étant configuré pour être connecté à la suspension (11) au lieu de la barre de torsion, en particulier ayant une portion d'accouplement du système de transmission (21) avec une dimension égale à une dimension d'une portion d'accouplement de la barre de torsion devant être enlevée, ladite dimension étant de préférence un diamètre.

2. Kit de conversion selon la revendication 1, dans lequel le ressort pneumatique (22) est connecté à une structure de support (25) qui est configurée pour être connectée à une structure porteuse de charge (2) du véhicule (1).

3. Kit de conversion selon la revendication 1 ou 2, dans lequel le système de transmission (21) comprend un élément de transfert (21a) et un bras de transmission (21b) ; le bras de transmission (21b) étant connecté fonctionnellement au ressort pneumatique (22) de telle sorte qu'une position, de préférence angulaire, du bras de transmission (21b) dépende de la première position du ressort pneumatique (22) ; le bras de transmission (21b) étant connecté intégralement à l'élément de transfert (21a) ; l'élément de transfert (21a) étant configuré pour être connecté intégralement à la suspension (11) de manière à faire varier une position de la suspension (11) sur la base de la première position du ressort pneumatique (22).

4. Kit de conversion selon la revendication 3, dans lequel le bras de transmission (21b) et l'élément de transfert (21a) sont connectés l'un à l'autre de telle sorte qu'une position angulaire de l'élément de transfert (21a) varie sur la base de la position du bras de transmission (21b) ; et dans lequel le système de transmission (21) est configuré pour transmettre la position angulaire de l'élément de transfert (21a) à la suspension (11), en particulier à un bras (16) de la suspension (11), pour faire varier la configuration de la suspension (11).

5. Kit de conversion selon la revendication 3 ou 4, comprenant une plaque (23) en butée contre le système de transmission (21), en particulier contre le bras de transmission (21b).

6. Procédé de conversion d'un véhicule commercial léger
; dans lequel le véhicule commercial léger (1) comprend une suspension (11) ayant une barre de torsion ; un ensemble d'essieu (3) comprenant une structure de support (10) et une suspension (11) ; le procédé comprenant les étapes suivantes : accouplement d'un ressort pneumatique ajustable (22) configuré pour adopter une pluralité de positions par rapport à un système de transmission (21), de telle sorte que le système de transmission (21) tourne lorsque la position du ressort pneumatique change ; accouplement intégral du système de transmission (21) à la suspension (11) du véhicule (1) au niveau d'un point de connexion (41a) de manière à transférer une rotation du système de transmission (21) à la suspension (11) et inversement ; le procédé comprenant les étapes de retrait de la barre de torsion de la suspension du véhicule (1) ; et d'accouplement du système de transmission (21) à la suspension (11) du véhicule commercial (1) au niveau du point de connexion (41a) au lieu de la barre de torsion.

7. Procédé de conversion d'un véhicule commercial léger selon la revendication 6 ; comprenant les étapes de connexion de la suspension (11) à la structure de support (10) de l'ensemble d'essieu (3) par le biais d'une articulation (41) au niveau du point de connexion (41a).
